# EUROPÄISCHE PATENTSCHRIFT

(11) **EP 1 097 280 B1**
(45) Veröffentlichungstag und Bekanntmachung des Hinweises auf die Patenterteilung: **29.06.2005**
(21) Anmeldenummer: 00934873.1
(22) Anmeldetag: 04.04.2000
(51) Int. Cl.: E04D 5/12, E04D 13/14

(54) **DICHTANORDNUNG**
SEALING ASSEMBLY
DISPOSITIF D'ETANCHEITE

(30) Priorität: 11.05.1999 DE 19921529
(43) Veröffentlichungstag der Anmeldung: 09.05.2001
(73) Patentinhaber: PHOENIX AKTIENGESELLSCHAFT, 21079 Hamburg (DE)
(72) Erfinder: ALBITZ, Rainer, D-21075 Hamburg (DE); HILKER, Andree, D-21614 Buxtehude (DE); SOCHOR, Josef, D-22175 Hamburg (DE)
(86) Internationale Anmeldenummer: PCT/DE2000/001040
(87) Internationale Veröffentlichungsnummer: WO 2000/068528

(56) Entgegenhaltungen:
- EP-A- 0 203 609
- GB-A- 2 094 226

## Beschreibung

Die Erfindung betrifft eine Dichtanordnung, bestehend aus :
- einem Untergrund, der planflächig und/oder bogenförmig und/oder abgewinkelt verläuft;
- wenigstens einer Dichtplane aus einem witterungsbeständigen elastomeren Werkstoff, insbesondere auf der Basis von EPDM, die den Untergrund ganz oder teilweise abdeckt; sowie
- einem Fügebereich, wonach
   - einer ersten Variante (I) der Randbereich der Dichtplane und der Untergrund ineinander übergehen oder nach
   - einer zweiten Variante (II) eine erste Dichtplane und eine zweite Dichtplane aneinanderstoßen.

Bei dem oben genannten Grundaufbau ist nun innerhalb des Fügebereiches nach beiden Varianten (I, II) ein Verbindungsstreifen vorhanden, dessen Unterseite ganz oder teilweise mit einer Flächengrundierung in Verbindung steht, wobei wiederum die Flächengrundierung nach
- der ersten Variante (I) sowohl mit dem Randbereich der Dichtplane als auch mit dem Untergrund (EP 0 203 609 A2, Fig. 3) bzw. nach
- der zweiten Variante (II) mit dem jeweiligen Randbereich der beiden aneinanderstoßenden Dichtplanen (DE 33 16 302 A1, Fig. 2)

Kontakt hat, und zwar unter vollständiger Abdeckung des Fügebereiches durch den Verbindungsstreifen.

Bei der Abdichtung von Bauwerken bzw. von Bauwerksteilen, wobei hier insbesondere Dächer genannt sein sollen, spielen Dichtplanen aus EPDM eine herausragende Rolle. Die Dichtplane kann dabei im einfachsten Falle aus einer einzelnen Dichtungsbahn bestehen. Häufig werden jedoch Dichtplanen aus einzelnen Dichtungsbahnen zu Teilplanen vorgefertigt, indem beispielsweise zwei oder mehrere Dichtungsbahnen durch Überlappung ihrer Längsränder mittels Klebung oder Verschweißen zusammengefügt werden (DE 33 16 302 A1).

Beim Verlegen von Dichtplanen auf Dächern, was der Einsatzschwerpunkt ist, muß nun folgendes beachtet werden:
- Dachkonstruktionen treten in vielfältigen Oberflächenkonstellationen auf. Dabei sind Dachrandanschlüsse (Attika), Durchbrüche sowie Eckbereiche mit in das Abdichtungskonzept einzubeziehen. Darüber hinaus müssen hinsichtlich des Untergrundes die verschiedensten Baumaterialien (Beton, Holz, Stahl, Kunststoff etc.) berücksichtigt werden.
- Der Herstellung großflächiger Dichtplanen in Werkshallen, beispielsweise im Hot-Bonding-Verfahren, sind Grenzen gesetzt, und zwar aus gerätetechnischen Gründen. Es ist daher erforderlich, Teilplanen vor Ort entsprechend der Dachkonstruktion aneinanderzufügen.

Die Aufgabe der Erfindung besteht nun darin, eine gattungsgemäße Dichtanordnung unter Berücksichtigung der beiden eingangs genannten Varianten (I, II) zu realisieren, wobei bei einer möglichst kleinen gerätetechnischen Ausrüstung die Dichtplanen vor Ort verlegt werden können, und zwar unter Bildung einer dauerhaften Abdichtung im jeweiligen Fügebereich. Die Fügestellen müssen sich dabei durch sehr gute technologische Eigenschaften, wie beispielsweise Schäl- und Scherbeanspruchung sowie Tieftemperaturfähigkeit auszeichnen. Femer darf die Nahtfestigkeit innerhalb des Fügebereiches auch nicht nach einer Alterung bei Raumtemperatur oder höheren Temperaturen (z.B. 80°C) sowie unter Feuchtigkeit beeinträchtigt werden.

Gelöst wird diese Aufgabe dadurch, daß
- der Verbindungsstreifen selbstklebend ist, indem dessen Unterseite, die mit der Flächengrundierung in Verbindung steht, selbstklebend ausgerüstet ist;
indem wiederum
- der Verbindungsstreifen mehrschichtig ausgebildet ist und dabei folgenden Schichtenaufbau aufweist:
   - eine Oberschicht aus einem TPE;
   - eine Mittelschicht aus einem elastomeren Werkstoff;
   - einen in die Mittelschicht eingebetteten Festigkeitsträger, der zumeist etwa mittig angeordnet ist und aus einem Glasgelege, Glasgewebe, einem Gelege aus einem ausgeschrumpften Polyester oder einem Vlies besteht;
   - eine an die Mittelschicht angrenzende Zwischenschicht aus einem TPE; sowie
   - eine Unterschicht aus einer polymermodifizierten, selbstklebenden Bitumenmasse, wobei die Unterschicht mit der Flächengrundierung in Verbindung steht.

Von besonderer Bedeutung ist die Flächengrundierung, und zwar vorzugsweise unter Verwendung einer Lösung, wobei das Lösungsmittel Ethylacetat, Cyclohexan, Benzin oder Toluol ist, und zwar in Verbindung mit folgender Grundmischung:

| | |
|---|---|
| Lösungsmittelgehalt | 50 bis 80 Gew.-%, insbesondere 65 Gew.-% |
| Feststoffgehalt | 50 bis 20 Gew.-%, insbesondere 35 Gew.-% |

Hinsichtlich des Feststoffes gilt dabei folgende Zusammensetzung:

| | |
|---|---|
| Polymerverschnitt | 45 bis 75 Gew.-%, insbesondere 60 Gew.-% |
| Aromatisches Kohlenwasserstoffharz | 35 bis 20 Gew.-%, insbesondere 25 Gew.-% |
| Sonstige Zusatzstoffe, insbesondere Weichmacher und Stabilisator | 20 bis 5 Gew.-%, insbesondere 15 Gew.-% |

Der Polymerverschnitt besteht wiederum auf der Basis SBS/SIS oder SBS/NR.

Weiter vorteilhafte Ausgestaltungen der erfindungsgemäßen Dichtanordnung werden im Zusammenhang mit der Figurenbeschreibung näher erläutert.

Die im Rahmen der Beschreibung und Patentansprüche benutzten Kurzbezeichnungen haben folgende Bedeutung:
- EPDM: Ethylen-Propylen-Dien-Mischpolymerisat
- IIR: Butylkautschuk
- NR: Naturkautschuk
- TPE: Thermoplastisches Elastomer
- SBS: Styrol-Butadien-Styrol-Mischpolymerisat
- SIS: Styrol-Isopren-Styrol-Mischpolymerisat
- APP: ataktisches Polypropylen
- PE: Polyethylen
- PP: Polypropylen

Die Erfindung wird nun anhand von Ausführungsbeispielen unter Bezugnahme auf schematische Zeichnungen erläutert. Es zeigen:
- Fig. 1: eine Dichtanordnung gemäß Variante I;
- Fig. 2: ein weiteres Ausführungsbeispiel einer Dichtanordnung gemäß Variante I;
- Fig. 3: eine Dichtanordnung gemäß Variante II.

In Verbindung mit diesen Figuren gilt folgende Bezugsziffernliste:
- **1**: Dichtanordnung der Variante I
- **2**: Untergrund mit den Bereichen (A, B)
- **3**: Dichtplane
- **4**: Verbindungsstreifen
- **5**: Flächengrundierung
- **6**: Durchbruch (z.B. Schornstein, Lüfter)
- **7**: Dichtanordnung der Variante I
- **8**: Untergrund mit den Bereichen (C, D)
- **9**: Dichtplane
- **10**: Verbindungsstreifen
- **11**: Flächengrundierung
- **12**: Durchbruch im Bereich des Untergrundes
- **13**: Dichtanordnung der Variante II
- **14**: planflächiger Untergrund
- **15**: Dichtplane (Teilplane)
- **16**: Dichtplane (Teilplane)
- **17**: Festigkeitsträger
- **18**: Verbindungsstreifen
- **19**: Flächengrundierung
- **20**: Oberschicht aus TPE
- **21**: Mittelschicht aus elastomerem Werkstoff
- **22**: Festigkeitsträger
- **23**: Zwischenschicht aus TPE
- **24**: Unterschicht aus polymermodifizierter, selbstklebender Bitumenmasse
- **25**: Abdeckschicht (Folie)
- **26**: Dessinierung

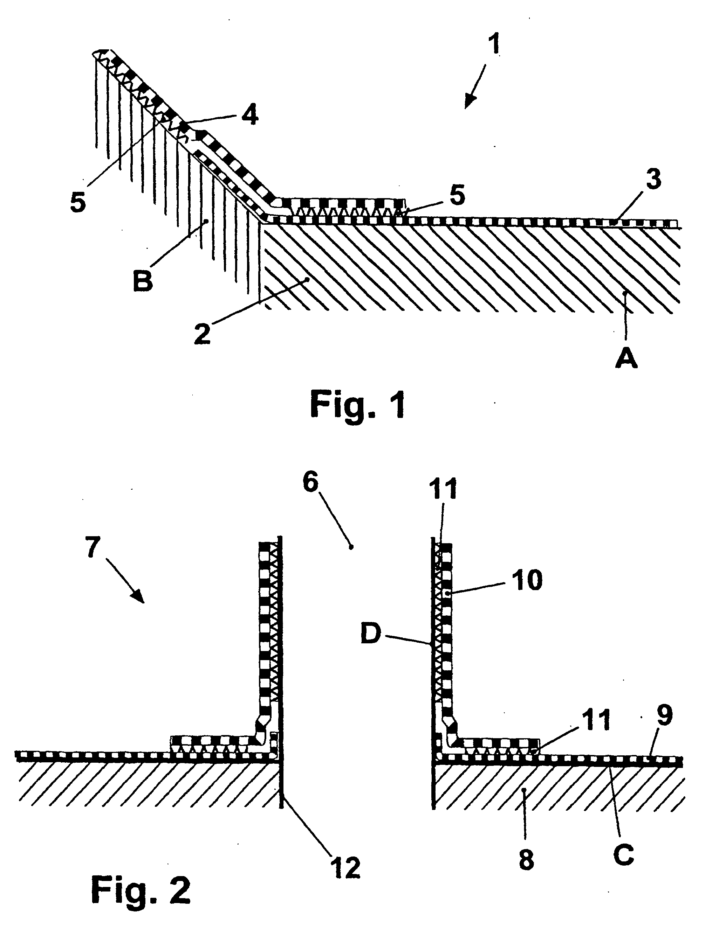

Der Untergrund **2** der Dichtanordnung **1** gemäß Fig. 1 besteht aus einem planflächigen horizontalen Bereich **A,** der in einen gewinkelten Bereich **B** übergeht. Ein Verbindungsstreifen **4** deckt dabei den Randbereich der Dichtplane **3** ab, wobei sich der Verbindungsstreifen über das Ende der Dichtplane hinweg bis in den freien Bereich des Untergrundes, der nicht durch eine Dichtplane abgedeckt ist, hinein erstreckt. Die Unterseite des Verbindungsstreifens **4** steht ferner mit einer Flächengrundierung **5** in Verbindung, wobei wiederum die Flächengrundierung sowohl mit dem Randbereich der Dichtplane **3** als auch mit dem Untergrund **2** (Bereich **B)** Kontakt hat, und zwar unter vollständiger Abdeckung des Fügebereiches durch den Verbindungsstreifen.

Die Fig. 2 veranschaulicht eine häufige Konstellation bei Dachkonstruktionen. Bedingt durch den Durchbruch **6** bzw. Durchbruchbereich **12** geht der Untergrund **8** von einem planflächigen horizontalen Bereich **C** in einen senkrechten Bereich **D** über. Ein Verbindungsstreifen **10** deckt auch hier den Randbereich der Dichtplane **9** ab, wobei sich der Verbindungsstreifen über das Ende der Dichtplane hinweg bis in den freien senkrechten Bereich des Untergrundes, der auch hier nicht durch eine Dichtplane abgedeckt ist, hinein erstreckt. Die Unterseite des Verbindungsstreifens **10** steht ferner mit einer Flächengrundierung **11** in Verbindung, wobei die Flächengrundierung sowohl mit dem Randbereich der Dichtplane **9** als auch mit dem Untergrund **8** (Bereich **D)** Kontakt hat, und zwar wiederum unter vollständiger Abdeckung des Fügebereiches durch den Verbindungsstreifen.

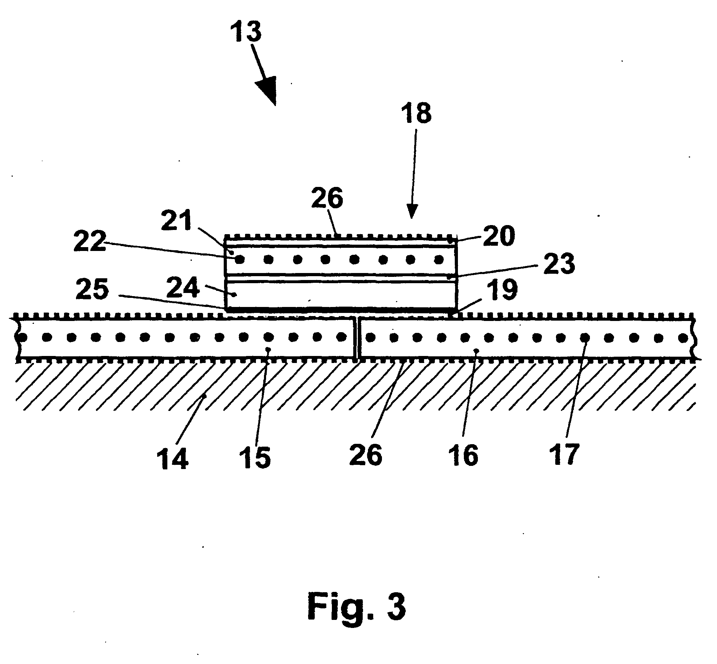

Fig. 3 zeigt eine Dichtanordnung **13,** bei der eine erste Dichtplane **15** und eine zweite Dichtplane **16** aneinanderstoßen. Die Dichtplanen aus EPDM sind zumeist mit einem Festigkeitsträger **17** versehen. Der Verbindungsstreifen **18** deckt jeweils den Randbereich der beiden Dichtplanen ab, wobei der Verbindungsstreifen folgenden Schichtenaufbau aufweist:
- eine Oberschicht **20** aus einem TPE;
- eine Mittelschicht **21** aus einem elastomeren Werkstoff, insbesondere auf der Basis von EPDM oder IIR;
- einen in die Mittelschicht **21** eingebetteten Festigkeitsträger **22,** der zumeist etwa mittig angeordnet ist und aus einem Glasgelege, Glasgewebe oder einem Gelege aus einem ausgeschrumpften Polyester oder einem Vlies, insbesondere Glasvlies, besteht;
- eine an die Mittelschicht **21** angrenzende Zwischenschicht **23** aus TPE; sowie
- eine Unterschicht **24** aus einer polymermodifizierten, selbstklebenden Bitumenmasse.

Hinsichtlich der Zusammensetzung der Oberschicht **20** und der Zwischenschicht **23** aus TPE wird beispielsweise auf die Druckschrift DE 31 08 473 C2 verwiesen.

Die Unterschicht **24** aus Bitumen ist insbesondere mit SBS, SIS oder APP polymermodifiziert. Weitere Bestandteile sind ein klebrig machendes Harz und ein Stabilisator sowie gegebenenfalls zumeist noch ein Füllstoff.

Die Unterschicht **24** ist hier zudem mit einer Abdeckschicht **25,** insbesondere in Form einer PE- oder PP-Folie, versehen, wobei hinsichtlich der Abdeckschicht vorzugsweise folgende Varianten realisiert werden:
- Die Abdeckschicht **25** ist ein fester, nicht abziehbarer Teil des Verbindungsstreifens **18,** wobei deren Schichtstärke 5 bis 20 µ, insbesondere 7 bis 10 µ, beträgt (Variante u).
- Die Abdeckschicht **25** ist abziehbar, wobei diese hier eine Schichtstärke von 30 bis 100 µ, insbesondere 50 bis 70 µ, aufweist (Variante **v).**

Die Unterseite des Verbindungsstreifens **18,** die gemäß Variante u durch die Abdeckschicht **25** gebildet ist, steht mit der Flächengrundierung **19** in Verbindung, wobei wiederum die Flächengrundierung mit dem jeweiligen Randbereich der beiden aneinanderstoßenden Dichtplanen **15** und **16** Kontakt hat, und zwar unter vollständiger Abdeckung des Fügebereiches durch den Verbindungsstreifen.

Nach der Variante **v** steht dagegen die Flächengrundierung **19** direkt in Kontakt mit der Unterschicht **24** des Verbindungsstreifens **18.**

Das Zusammenfügen des Verbindungsstreifens **18** mit den beiden Dichtplanen **15** und **16** erfolgt beispielsweise mittels Heißluftverschweißung oder Klebung durch die Selbstklebefähigkeit des Verbindungsstreifens. Dabei wird die Abdeckschicht **25** gemäß Variante u nicht entfernt, da diese insbesondere bei der Verwendung einer Folie durch die Hitze aufgebrochen wird, so daß die Selbstklebefähigkeit der polymermodifizierten Bitumenmasse (Schicht **24)** zum Tragen kommt.

Die Ober- und/oder Unterseiten der Dichtplanen **15** und **16** wie auch die Oberseite des Verbindungsstreifens **18** können zusätzlich mit einer Dessinierung **26** versehen sein.

## Patentansprüche

1. Dichtanordnung (1, 7, 13), bestehend aus :
- einem Untergrund (2, 8, 14), der planflächig und/oder bogenförmig und/oder abgewinkelt verläuft;
- wenigstens einer Dichtplane (3, 9, 15, 16) aus einem witterungsbeständigen elastomeren Werkstoff, insbesondere auf der Basis von EPDM, die den Untergrund (2, 8, 14) ganz oder teilweise abdeckt; sowie
- einem Fügebereich, wonach
• einer ersten Variante (I) der Randbereich der Dichtplane (3, 9) und der Untergrund (2, 8) ineinander übergehen oder nach
• einer zweiten Variante (II) eine erste Dichtplane (15) und eine zweite Dichtplane (16) aneinanderstoßen;
wobei
- innerhalb des Fügebereiches nach beiden Varianten (I, II) ein Verbindungsstreifen (4, 10, 18) vorhanden ist, dessen Unterseite ganz oder teilweise mit einer Flächengrundierung (5, 11, 19) in Verbindung steht, wobei wiederum die Flächengrundierung nach
• der ersten Variante (I) sowohl mit dem Randbereich der Dichtplane (3, 9) als auch mit dem Untergrund (2, 8) bzw. nach
• der zweiten Variante (II) mit dem jeweiligen Randbereich der beiden aneinanderstoßenden Dichtplanen (15, 16)
Kontakt hat, und zwar unter vollständiger Abdeckung des Fügebereiches durch den Verbindungsstreifen;
**dadurch gekennzeichnet, daß**
- der Verbindungsstreifen (4, 10, 18) selbstklebend ist, indem dessen Unterseite, die mit der Flächengrundierung (5, 11, 19) in Verbindung steht, selbstklebend ausgerüstet ist;
indem wiederum
- der Verbindungsstreifen (4, 10, 18) mehrschichtig ausgebildet ist und dabei folgenden Schichtenaufbau aufweist:
• eine Oberschicht (20) aus einem TPE;
• eine Mittelschicht (21) aus einem elastomeren Werkstoff;
• einen in die Mittelschicht (21) eingebetteten Festigkeitsträger (22), der zumeist etwa mittig angeordnet ist und aus einem Glasgelege, Glasgewebe, einem Gelege aus einem ausgeschrumpften Polyester oder einem Vlies besteht;
• eine an die Mittelschicht (21) angrenzende Zwischenschicht (23) aus einem TPE; sowie
• eine Unterschicht (24) aus einer polymermodifizierten, selbstklebenden Bitumenmasse, wobei die Unterschicht mit der Flächengrundierung (19) in Verbindung steht.

2. Dichtanordnung nach Anspruch 1, **dadurch gekennzeichnet, daß** die Unterschicht (24) eine polymermodifizierte, selbstklebende Bitumenmasse auf der Basis SBS, SIS oder APP ist.

3. Dichtanordnung nach Anspruch 1 oder 2, **dadurch gekennzeichnet, daß** die Mittelschicht (21) aus einem elastomeren Werkstoff auf der Basis EPDM oder IIR besteht.

4. Dichtanordnung nach einem der Ansprüche 1 bis 3, **dadurch gekennzeichnet, daß** in Bezug auf den Festigkeitsträger (22) das Vlies ein Glasvlies ist.

5. Dichtanordnung nach einem der Ansprüche 1 bis 4, **dadurch gekennzeichnet, daß** der Verbindungsstreifen (18) an seiner der Flächengrundierung (19) zugewandten Unterseite mit einer Abdeckschicht (25), insbesondere in Form einer Folie, versehen ist.

6. Dichtanordnung nach Anspruch 5, **dadurch gekennzeichnet, daß** die Abdeckschicht (25) eine PE- oder PP-Folie ist.

7. Dichtanordnung nach Anspruch 5 oder 6, **dadurch gekennzeichnet, daß** die Abdeckschicht (25) ein fester, nicht abziehbarer Teil des Verbindungsstreifens (18) ist.

8. Dichtanordnung nach Anspruch 7, **dadurch gekennzeichnet, daß** die Abdeckschicht (25) eine Schichtstärke von 5 bis 20 µ, insbesondere 7 bis 10 µ, aufweist.

9. Dichtanordnung nach Anspruch 5 oder 6, **dadurch gekennzeichnet, daß** die Abdeckschicht (25) abziehbar ist.

10. Dichtanordnung nach Anspruch 9, **dadurch gekennzeichnet, daß** die Abdeckschicht (25) eine Schichtstärke von 30 bis 100 µ, insbesondere 50 bis 70 µ, aufweist.

11. Dichtanordnung nach einem der Ansprüche 1 bis 10, **dadurch gekennzeichnet, daß** die Flächengrundierung (5, 11, 19) eine Lösung ist.

12. Dichtanordnung nach Anspruch 11, **dadurch gekennzeichnet, daß** das Lösungsmittel Ethylacetat, Cyclohexan, Benzin oder Toluol ist.

13. Dichtanordnung nach Anspruch 11 oder 12, **dadurch gekennzeichnet, daß** der Lösung folgende Zusammensetzung zugrundeliegt:
| | |
|---|---|
| Lösungsmittelgehalt | 50 bis 80 Gew.-% |
| Feststoffgehalt | 50 bis 20 Gew.-% |

14. Dichtanordnung nach Anspruch 13, **dadurch gekennzeichnet, daß** der Lösung folgende Zusammensetzung zugrundeliegt:
| | |
|---|---|
| Lösungsmittelgehalt | 65 Gew.-% |
| Feststoffgehalt | 35 Gew.-% |

15. Dichtanordnung nach einem der Ansprüche 11 bis 14, **dadurch gekennzeichnet, daß** der Feststoff aus folgenden Bestandteilen besteht:
| | |
|---|---|
| Polymerverschnitt | 45 bis 75 Gew.-% |
| Aromatisches Kohlenwasserstoffharz | 35 bis 20 Gew.-% |
| Sonstige Zusatzstoffe, insbesondere Weichmacher und Stabilisator | 20 bis 5 Gew.-% |

16. Dichtanordnung nach Anspruch 15, **dadurch gekennzeichnet, daß** der Feststoff aus folgenden Bestandteilen besteht:
| | |
|---|---|
| Polymerverschnitt | 60 Gew.-% |
| Aromatisches Kohlenwasserstoffharz | 25 Gew.-% |
| Sonstige Zusatzstoffe, insbesondere Weichmacher und Stabilisator | 15 Gew.-% |

17. Dichtanordnung nach Anspruch 15 oder 16, **dadurch gekennzeichnet, daß** der Polymerverschnitt auf der Basis SBS/SIS oder SBS/NR besteht.

## Claims

1. Sealing arrangement (1, 7, 13), consisting of
- a substrate (2, 8, 14) which is flat and/or curved and/or angled,
- at least one sealing cover (3, 9, 15, 16) made of a weather resistant elastomer material, in particular based on EPDM, which wholly or partly covers the substrate (2, 8, 14), and
- a joint area in which
• according to a first variant (I) the edge area of the sealing cover (3, 9) and the substrate (2, 8) run into one another or
• according to a second variant (II) a first sealing cover (15) and a second sealing cover (16) abut one another,
wherein
- inside the joint area in both variants (I, II) there is a connecting strip (4, 10, 18) the underside of which is wholly or partly connected to a surface primer (5, 11, 19), wherein again the surface primer
• according to the first variant (I) is in contact both with the edge area of the sealing cover (3, 9) and with the substrate (2, 8) and
• according to the second variant (II) is in contact with the respective edge area of the two abutting sealing covers (15, 16),
the joint area being completely covered by the connecting strip,
**characterised in that**
- the connecting strip (4, 10, 18) is self-adhesive **in that** its underside, which is connected to the surface primer (5, 11, 19), is equipped so that it is self-adhesive,
**in that** again
- the connecting strip (4, 10, 18) is embodied in a plurality of layers and exhibits the following layer structure:
• an upper layer (20) of a TPE,
• a middle layer (21) of an elastomer material,
• a strength member (22) which is embedded in the middle layer (21) and is usually arranged roughly centrally and consists of a glass inlay, glass fabric, an inlay of a shrunk polyester or a fleece,
• an intermediate layer (23) of a TPE which adjoins the middle layer (21), and
• an underlayer (24) made of a polymer-modified, self-adhesive bitumen compound, the underlayer being connected to the surface primer (19).

2. Sealing arrangement according to claim 1, **characterised in that** the underlayer (24) is a polymer-modified, self-adhesive bitumen compound based on SBS, SIS or APP.

3. Sealing arrangement according to claim 1 or 2, **characterised in that** the middle layer (21) is made of an elastomer material based on EPDM or IIR.

4. Sealing arrangement according to one of claims 1 to 3, **characterised in that** in relation to the strength member (22) the fleece is a glass fleece.

5. Sealing arrangement according to one of claims 1 to 4, **characterised in that** on its underside facing the surface primer (19) the connecting strip (18) is provided with a covering layer (25), in particular in the form of a sheet.

6. Sealing arrangement according to claim 5, **characterised in that** the covering layer (25) is a PE or PP sheet.

7. Sealing arrangement according to claim 5 or 6, **characterised in that** the covering layer (25) is a solid undetachable part of the connecting strip (18).

8. Sealing arrangement according to claim 7, **characterised in that** the covering layer (25) exhibits a layer thickness of 5 to 20 µ, in particular 7 to 10 µ.

9. Sealing arrangement according to claim 5 or 6, **characterised in that** the covering layer (25) is detachable.

10. Sealing arrangement according to claim 9, **characterised in that** the covering layer (25) exhibits a layer thickness of 30 to 100 µ, in particular 50 to 70 µ.

11. Sealing arrangement according to one of claims 1 to 10, **characterised in that** the surface primer (5, 11, 19) is a solution.

12. Sealing arrangement according to claim 11, **characterised in that** the solvent is ethyl acetate, cyclohexane, naphtha or toluene.

13. Sealing arrangement according to claim 11 or 12, **characterised in that** the solution has the following basic composition:
solvent content 50 to 80% by weight,
solid content 50 to 20% by weight.

14. Sealing arrangement according to claim 13, **characterised in that** the solution has the following basic composition:
solvent content 65% by weight,
solid content 35% by weight.

15. Sealing arrangement according to one of claims 11 to 14, **characterised in that** the solid consists of the following components:
polymer blend 45 to 75% by weight,
aromatic hydrocarbon resin 35 to 20% by weight,
other additives, in particular plasticiser and stabiliser 20 to 5% by weight.

16. Sealing arrangement according to claim 15, **characterised in that** the solid consists of the following components:
polymer blend 60% by weight,
aromatic hydrocarbon resin 25% by weight,
other additives, in particular plasticiser and stabiliser 15% by weight.

17. Sealing arrangement according to claim 15 or 16, **characterised in that** the polymer blend is based on SBS/SIS or SBS/NR.

## Revendications

1. Dispositif d'étanchéité (1, 7, 13), composé d' :
- un fond (2, 8, 14) d'allure plate et plane et/ou arquée et/ou coudée ;
- au moins un plan d'étanchéité (3, 9, 15, 16) formé d'un matériau élastomère résistant aux intempéries, en particulier à base d'EPDM, couvrant en totalité ou en partie le fond (2, 8, 14) ; et
- une zone de jointoiement, selon lequel
• une première variante (I) de la zone de bordure du plan d'étanchéité (3, 9) et du fond (2, 8) se transforment l'une en l'autre, ou selon lequel
• une deuxième variante (II), un premier plan d'étanchéité (15) et un deuxième plan d'étanchéité (16) se jointoient l'un à l'autre ;
où
- à l'intérieur de la zone de jointoiement selon les deux variantes (I, II) est prévue une bande de liaison (4, 10, 18), dont la face inférieure est en liaison, en totalité ou en partie, avec une couche de fond de surface (5, 11, 19), à son tour la couche de fonds de surface
• selon une première variante (I) est en contact, tant avec la zone de bordure du plan d'étanchéité (3, 9), qu'également avec le fond (2, 8), ou
• selon une deuxième variante (II) est en contact avec la zone de bordure respective des deux plans d'étanchéité (15, 16) se jointoyant l'un à l'autre,
et précisément, en recouvrant complètement la zone de jointoiement par la bande de liaison,
**caractérisé en ce que**
- la bande de liaison (4, 10, 18) est autoadhésive, **en ce que** sa face inférieure, reliée à la couche de fond de surface (5, 11, 19), est autoadhésive,
**en ce que**, de plus,
- la bande de liaison (4, 10, 18) est à plusieurs couches et présente alors la structure de couches suivante
• une couche supérieure (20) en un TPE ;
• une couche médiane (21) en un matériau élastomère ;
• un support de résistance (22), incorporé dans la couche médiane (21) et disposé en majeure partie à peu près centralement et formé d'une nappe en verre, d'un tissu de verre d'une nappe en polyester rétractée ou d'un matelas de fibres ;
• une couche intermédiaire (23), limitrophe à la couche médiane (21) formée d'un TPE ; et
• une couche inférieure (24), formée d'une masse de bitume autoadhésive à polymère modifié, la couche inférieure étant en liaison avec la couche de fond de surface (19).

2. Dispositif d'étanchéité selon la revendication 1, **caractérisé en ce que** la couche inférieure (24) est une masse de bitume autoadhésive à polymère modifié, à base de SBS, SIS ou APP.

3. Dispositif d'étanchéité selon la revendication 1 ou 2, **caractérisé en ce que** la couche médiane (21) est formée d'un matériau élastomère, à base de EPDM ou d'IIR.

4. Dispositif d'étanchéité selon la revendication 1 à 3, **caractérisé en ce que** le matelas de fibres, en référence au support de résistance (22), est un matelas de fibres de verre.

5. Dispositif d'étanchéité selon l'une des revendications 1 à 4, **caractérisé en ce que** la bande de liaison (18), sur sa face inférieure, tournée vers la couche de fond de surface (19), est munie d'une couche de revêtement (25), en particulier ayant la forme d'une feuille.

6. Dispositif d'étanchéité selon la revendication 5, **caractérisé en ce que** la couche de recouvrement (25) est une feuille de PE ou de PP.

7. Dispositif d'étanchéité selon la revendication 5 ou 6, **caractérisé en ce que** la couche de recouvrement (25) est une partie fixe, non extractible, de la bande de liaison (18).

8. Dispositif d'étanchéité selon la revendication 7, **caractérisé en ce que** la couche de recouvrement (25) présente une épaisseur de couche de 5 à 20 µm, en particulier 7 à 10 µm.

9. Dispositif d'étanchéité selon la revendication 5 ou 6, **caractérisé en ce que** la couche de recouvrement (25) est extractible ou pelable.

10. Dispositif d'étanchéité selon la revendication 9, **caractérisé en ce que** la couche de recouvrement (25) présente une épaisseur de couche de 30 à 100 µm en particulier de 50 à 70 µm.

11. Dispositif d'étanchéité selon l'une des revendications 1 à 10, **caractérisé en ce que** la couche de fond de surface (5, 11, 9) est une solution.

12. Dispositif d'étanchéité selon la revendication 11, **caractérisé en ce que** le solvant est un éthylacétate cychlohexane, benzine ou toluène.

13. Dispositif d'étanchéité selon la revendication 11
ou 12, **caractérisé en ce que** la solution a comme base la composition suivante :
| | |
|---|---|
| teneur en solvant | 50 à 80 % en poids |
| teneur en solide | 50 à 20 % en poids. |

14. Dispositif d'étanchéité selon la revendication 13, **caractérisé en ce que** la solution a comme base la composition suivante :
| | |
|---|---|
| teneur en solvant | 65 % en poids |
| teneur en solide | 35 % en poids. |

15. Dispositif d'étanchéité selon l'une des revendications 1 à 14, **caractérisé en ce que** le solide est formé des composants suivants :
| | |
|---|---|
| coupage de polymère | 45 à 75 % en poids |
| résine d'hydrocarbure aromatique | 35 à 20 % en poids |
| autres additifs, en particulier plastifiant et stabilisateurs | 20 à 5 % en poids. |

16. Dispositif d'étanchéité selon la revendication 15, **caractérisé en ce que** le solide formé des composants suivants :
| | |
|---|---|
| coupage de polymère | 60 % en poids |
| résine d'hydrocarbure aromatique | 25 % en poids |
| autres additifs, en particulier plastifiant et stabilisateurs | 15 % en poids. |

17. Dispositif d'étanchéité selon la revendication 15 ou 16, **caractérisé en ce que** le coupage de polymère est à base de SBS/SIS ou SBS/NR.
